# EUROPEAN PATENT APPLICATION

(11) **EP 2 003 578 A1**
(43) Date of publication of application: **17.12.2008**
(21) Application number: 08156046.8
(22) Date of filing: 12.05.2008
(51) Int. Cl.: G06F 17/30

(54) **System and method of checking integrity of content and metadata**

(30) Priority: 12.06.2007 KR 20070057408
(71) Applicant: Samsung Electronics Co., Ltd., Suwon-si, Gyeonggi-do 442-742 (KR)
(72) Inventor: KIM, Yong-Sung, Gyeonggi-do (KR); JUNG, Tae-Ung, Gyeonggi-do (KR)
(74) Representative: Davies, Robert Ean

(57) **Abstract**

A system and method of checking the integrity of content and metadata are provided. The integrity-checking method includes storing changed content in a first storage space, and storing the metadata corresponding to the changed content in a second storage space.

## Description

Systems and methods consistent with the present invention relate to checking the integrity of content and metadata, and, more particularly, to checking the integrity of content and metadata that can non-simultaneously process synchronization between the content and the metadata by creating a difference between time points at which the content and the metadata are created or deleted.

In order to store both content and metadata in a database system, a related art integrity-checking method checks synchronization between the content and the metadata by using a transaction function of the database system.

However, the related art method of checking the integrity of the content and the metadata that stores both the content and the metadata in the database system has a problem that it is not possible to give priority when processing the content. Also, according to the method, the integrity is checked by deleting the content in the case where the content has been created but the metadata has not been created.

Accordingly, in order to address the above-described problems, there is a need for a technique that can non-simultaneously process synchronization between content and metadata and promptly recover the synchronization between the content and the metadata.

Exemplary embodiments of the present invention aim to overcome the above disadvantages and other disadvantages not described above. Also, the present invention is not required to overcome the disadvantages described above, and an exemplary embodiment of the present invention may not overcome any of the problems described above.

Embodiments of the present invention provide a system and method of storing content in a file system, and storing a content log that reflects the change of the content and metadata in a database system.

Embodiments of the present invention also provide a system and method of non-simultaneously processing synchronization between content and metadata by making a difference between time points at which the content and the metadata are created or deleted.

Embodiments of the present invention also provide a system and method of recovering synchronization between content and metadata even if power is turned off before creation of the content and the corresponding metadata is completed and then the power is turned on again.

According to an aspect of the present invention, there is provided a method of checking the integrity of the content and metadata, according to embodiments of the present invention, which includes storing changed content in a first storage space; and storing the metadata corresponding to the changed content in a second storage space.

According to another aspect of the present invention, there is provided a system for checking the integrity of the content and metadata, which includes a file system storing the content and changed content; a content-change-processing module reflecting the changed content in a content-change list and storing the content-change list; a metadata-processing module changing the metadata that corresponds to a content change item in the content-change list; and a database system storing the metadata.

For a better understanding of the invention, and to show how embodiments of the same may be carried into effect, reference will now be made, by way of example, to the accompanying diagrammatic drawings in which:
FIG. 1 is a view illustrating a system for checking the integrity of content and metadata according to an embodiment of the present invention;
FIG. 2 is a flowchart illustrating a process in which a content-change-processing module generates a content-change log and a content-change list and processes the content according to an embodiment of the present invention;
FIG. 3 is a flowchart illustrating a process in which a metadata-processing module processes metadata corresponding to changed content, and generates a metadata list that reflects the metadata according to an embodiment of the present invention;
FIG. 4 is a flowchart illustrating a process of reflecting metadata in a database system according to an embodiment of the present invention; and
FIG. 5 is a flowchart illustrating a process of recovering metadata if a power supply is interrupted before the metadata is reflected in a database system according to an embodiment of the present invention.

Hereinafter, embodiments of the present invention will be described in detail with reference to the accompanying drawings. The aspects and features of the present invention and methods for achieving the aspects and features will be apparent by referring to the embodiments to be described in detail with reference to the accompanying drawings. However, the present invention is not limited to the embodiments disclosed hereinafter, but can be implemented in diverse forms. The matters defined in the description, such as the detailed construction and elements, are nothing but specific details provided to assist those of ordinary skill in the art in a comprehensive understanding of the invention, and the present invention is only defined within the scope of the appended claims. In the entire description of the present invention, the same drawing reference numerals are used for the same elements across various figures.

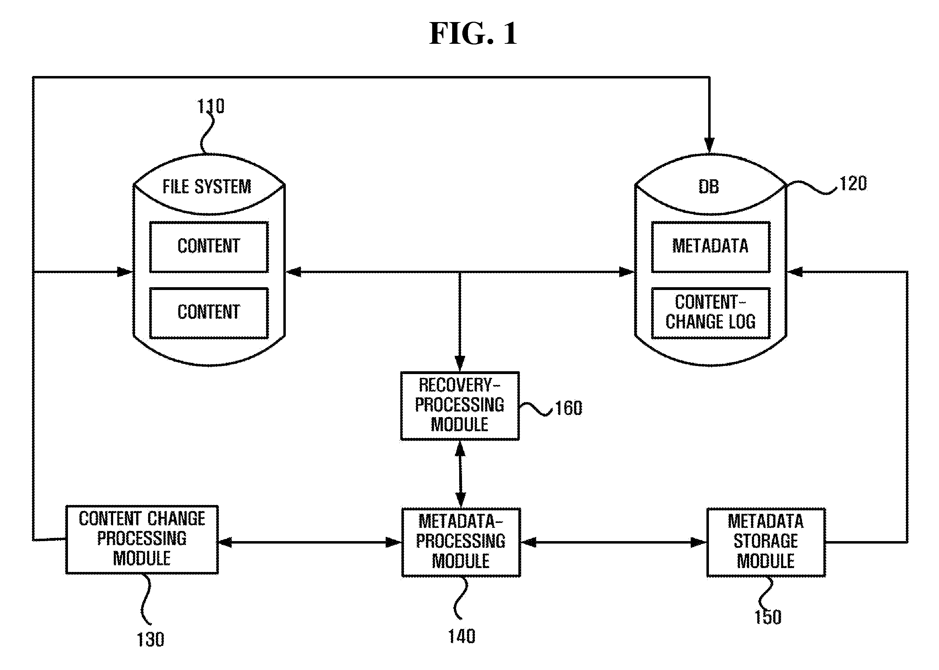

FIG. 1 is a view illustrating a system for checking the integrity of content and metadata according to an embodiment of the present invention.

Referring to FIG. 1, the system for checking the integrity of content and metadata according to an embodiment of the present invention includes a file system 110, a database (DB)system 120, a content-change-processing module 130, a metadata-processing module 140, a metadata storage module 150, and a recovery-processing module 160.

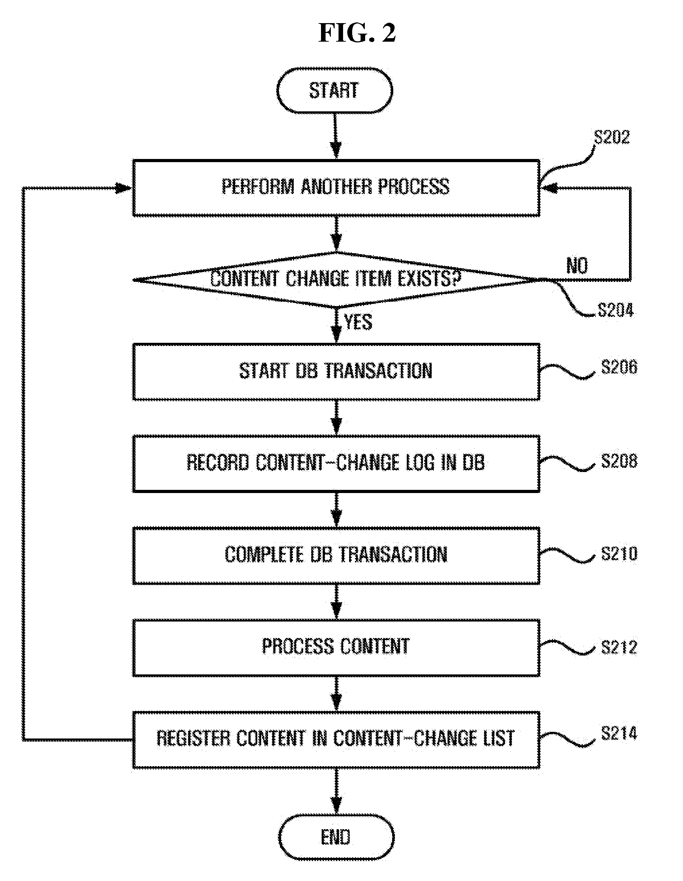

The content-change-processing module 130 processes a content change such as content creation, content movement, content copy, content deletion, and so forth, and changes a content-change log that reflects the content change and a content-change list. The content-change-processing module 130 stores the changed content in the file system 110, and stores the changed content-change log in the database system 120. In addition, the content-change-processing module 130 transfers the content-change list to the metadata-processing module 140. The content-change log and the content-change list may be stored in any other storage unit in addition to the content-change-processing module 130. The content-change process will be described later with reference to FIG. 2.

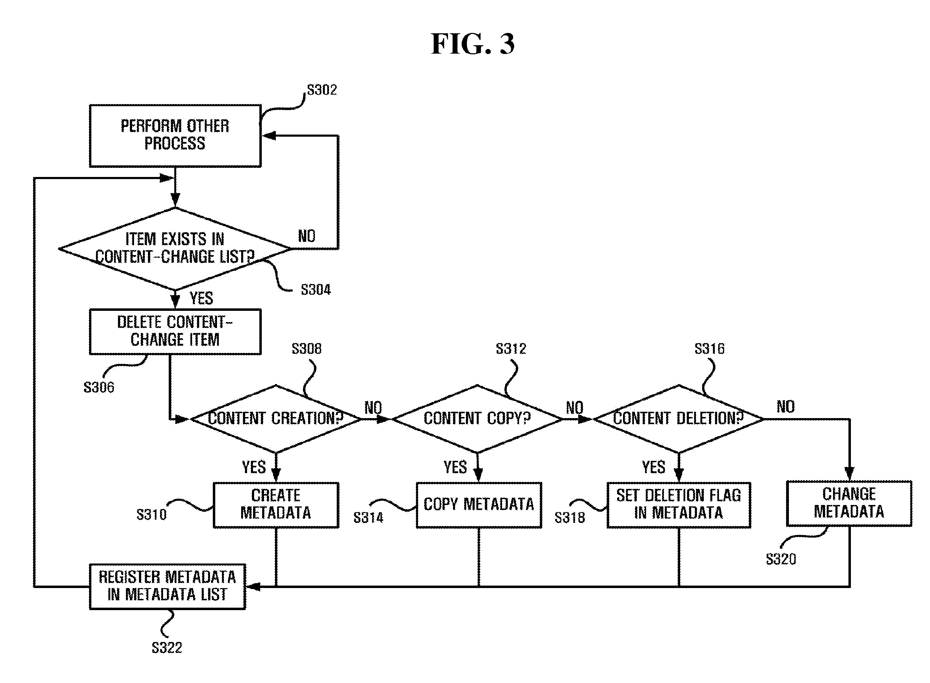

The metadata-processing module 140 recognizes the content-change list, and changes the metadata that corresponds to a content change item in the content-change list. The metadata-processing module 140 changes the metadata list by reflecting the changed metadata therein, and stores the changed metadata list. After storing of the metadata list, the metadata-processing module 140 transfers the metadata list to the metadata storage module 150. The change of the metadata and the metadata list includes creation, copy, deletion, or updating of the metadata list. The metadata list may be stored in any other storage unit in addition to the metadata-processing module 140. The metadata process will be described later with reference to FIG. 3.

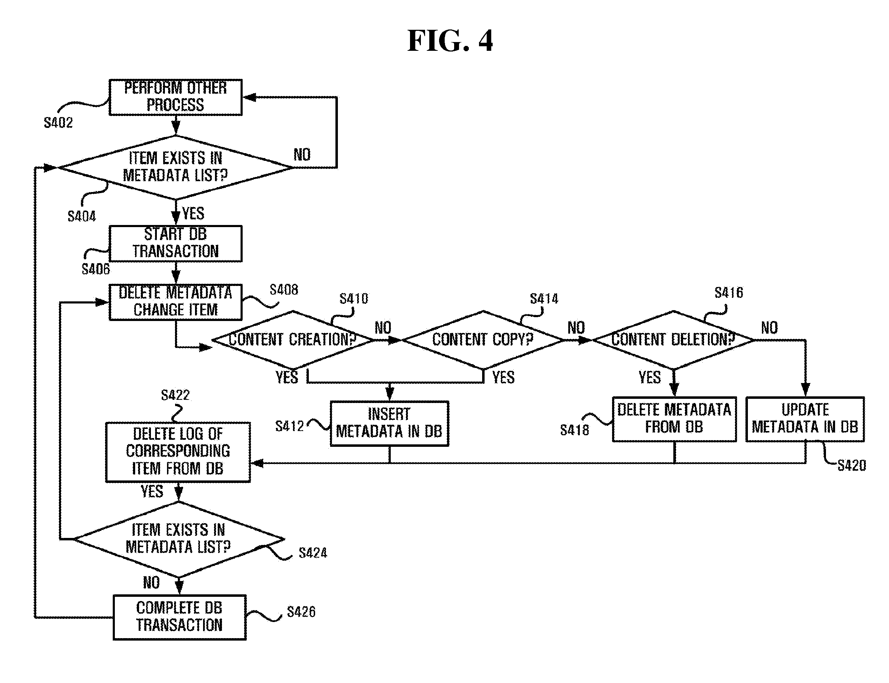

The metadata storage module 150 reflects and stores in the database system 120 a metadata change item registered in the metadata list that is transferred from the metadata-processing module 140. The process of reflecting the metadata in the database system 120 will be described later with reference to FIG. 4.

The file system 110 stores the content and the changed content transferred from the content-change-processing module 130.

The database system 120 stores the metadata and the content-change log. The metadata is transferred from the metadata storage module 150, and the content-change log is transferred from the content-change-processing module 130. Also, the database system 120 checks the integrity of the content and the metadata by processing synchronization between the content and the metadata using a transaction function.

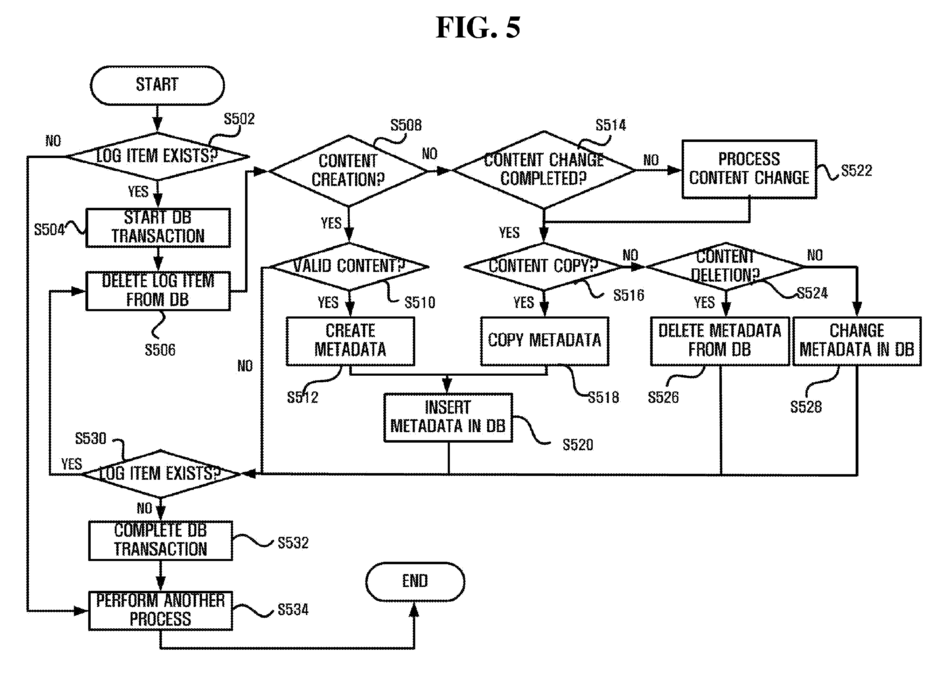

If the integrity of the content and the metadata is broken before the metadata that corresponds to the content change is reflected in the database system 120, the recovery-processing module 160 recovers the integrity of the content and the metadata. Specifically, if a power supply is interrupted and then the power is supplied again, the recovery-processing module 160 successively recovers the metadata that corresponds to the content log item by recognizing the content change item of the content-change log stored in the database system 120. The process of recovering the metadata will be described later with reference to FIG. 5.

FIG. 2 is a flowchart illustrating a process in which a content-change-processing module generates a content-change log and a content-change list, and processes the content according to an exemplary embodiment of the present invention.

Referring to FIG. 2, if the content-change-processing module 130 changes the content (S204) while another process is performed (S202), the database system 120 starts the database transaction (S206). After starting of the transaction, the content-change-processing module 130 stores the content-change log that reflects the change of the content in the database system 120 (S208), and completes the database transaction (S210).

After the completion of the database transaction, the content-change-processing module 130 processes the content change (S212), and then registers the content change in the content-change list by reflecting the changed content therein (S214). The content-change list that reflects the changed content is stored.

FIG. 3 is a flowchart illustrating a process in which a metadata-processing module processes the metadata corresponding to the changed content, and generates the metadata list that reflects the metadata according to an exemplary embodiment of the present invention.

Referring to FIG. 3, while another process is performed (S302), the metadata-processing module 140 determines whether a content change item exists by recognizing the content-change list stored in the content-change-processing module 130 (S304).

If it is determined that the content change item exists, the metadata-processing module 140 deletes the content change item (S306).

The metadata-processing module 140 determines whether the content change item refers to the content creation (S308). If it is determined that the content change item refers to the content creation, the metadata-processing module 140 creates metadata that corresponds to the content change item (S310), and reflects and registers the created metadata in the metadata list (S322).

If it is determined that the content change item does not refer to the content creation, the metadata-processing module 140 determines whether the content change item refers to the content copy (S312). If it is determined that the content change item refers to the content copy, the metadata-processing module 140 copies metadata that corresponds to the content change item (S314), and reflects and registers the metadata in the metadata list (S322).

If it is determined that the content change item does not refer to the content copy, the metadata-processing module 140 determines whether the content change item refers to the content deletion (S316). If it is determined that the content change item refers to the content deletion, the metadata-processing module 140 sets a deletion flag on the metadata that corresponds to the content change item (S318), and reflects and registers the metadata in the metadata list (S322).

If it is determined that the content change item does not refer to the content deletion, the metadata-processing module 140 changes the metadata (S320), and reflects and registers the metadata in the metadata list (S322). If the content change item does not refer to the content deletion, the content change item includes the content movement.

Operations S304 to S322 are repeatedly performed while the content change item exists in the content-change list.

After operation S322, the metadata-processing module 140 stores the changed metadata list, and the metadata storage module 150 stores the changed metadata in the database system 120. If no content change item exists in the content-change list (S304), the metadata-processing module 140 completes the metadata process, and proceeds to another process (S302).

FIG. 4 is a flowchart illustrating a process of reflecting metadata in a database system according to an embodiment of the present invention.

Referring to FIG. 4, if a metadata change item in the metadata list is changed while another process is performed (S402), the metadata storage module 150 determines whether the content change item that corresponds to the metadata change item exists by recognizing the metadata change item stored in the metadata-processing module 140 (S404).

If it is determined that the metadata change item exists, the metadata storage module 150 starts a database transaction (S406). The metadata storage module 150 deletes the metadata change item that corresponds to the content change item (S408).

The metadata storage module 150 determines whether the metadata change item refers to the content creation (S410). If it is determined that the content change item that corresponds to the metadata change item refers to the content creation, the metadata storage module 150 inserts the metadata that corresponds to the content creation in the database system 120 (S412).

If it is determined that the content change item that corresponds to the metadata change item does not refer to the content creation, the metadata storage module 150 determines whether the metadata change item refers to the content copy (S414). If it is determined that the content change item that corresponds to the metadata change item refers to the content copy, the metadata storage module 150 inserts the metadata in the database system 120 (S412).

If it is determined that the content change item that corresponds to the metadata change item does not refer to the content copy, the metadata storage module 150 determines whether the metadata change item refers the content deletion (S416). If it is determined that the content change item that corresponds to the metadata change item refers to the content deletion, the metadata storage module 150 deletes the metadata stored in the database system 120 (S418).

If it determined that the content change item that corresponds to the metadata change item does not refer to the content deletion, the metadata storage module 150 updates the metadata stored in the database system 120 (S420). If the content change item does not refer to the content deletion, the content change item includes the content movement.

After performing operations S410 to S420, the metadata storage module 150 deletes the log of the content change item of the content-change log that corresponds to the metadata stored in the database system 120 (S422).

The metadata storage module 150 determines whether a metadata change item that corresponds to the content change item of the metadata list exists (S424).

If it is determined that the metadata change item exists, the metadata storage module 150 repeats operations S408 to S422.

If it is determined that no metadata change item exists, the metadata storage module 150 completes the transaction process, and proceeds to operation S404. If no metadata change item exists in the metadata list, the metadata storage module 150 completes the metadata process and proceeds to another process (S402).

FIG. 5 is a flowchart illustrating a process of recovering metadata if a power supply is interrupted before the metadata is reflected in a database system according to an embodiment of the present invention.

Referring to FIG. 5, the recovery-processing module 160 determines whether a content change item that corresponds to the content-change log exists by recognizing the content-change log stored in the database system 120 (S502).

If it is determined that the content change item exists, the recovery-processing module 160 starts the database transaction (S504).

The recovery-processing module 160 deletes the content log item of the content-change log (S506).

The recovery-processing module 160 determines whether the content change item that corresponds to the log item of the content refers to the content creation (S508). If it is determined that the content change item refers to the content creation, the recovery-processing module 160 determines whether the content is valid (S510).

If it is determined that the content is valid, the recovery-processing module 160 creates the metadata that corresponds to the content (S512), and inserts the created metadata in the database system 120 (S520). Accordingly, the metadata that corresponds to the content is stored in the database system 120.

If it is determined that the content is not valid, the recovery-processing module 160 does not create the metadata that corresponds to the content, and proceeds to (S530).

The recovery-processing module 160 confirms that the content-change process is completed (S514).

If it is confirmed that the content-change process is completed, the recovery-processing module 160 determines whether the content change that corresponds to the content change item of the content log item refers to the content copy (S516).

If it is determined that the content change refers to the content copy, the recovery-processing module 160 copies the metadata (S518), and inserts the copied metadata in the database system 120 (S520).

If it is determined that the content change does not refer to the content copy, the recovery-processing module 160 determines whether the content change that corresponds to the content change item of the content log item refers to the content deletion (S524).

If it is determined that the content change refers to the content deletion, the recovery-processing module 160 deletes the metadata stored in the database system 120 (S526).

If it is determined that the content change does not refer to the content deletion, the recovery-processing module changes the metadata stored in the database system 120 (S528). Here, if the content change item does not refer to the content deletion, the content change item includes the content movement.

If the content-change process is not completed, the recovery-processing module 160 completes the content-change process (S522).

After the completion of the change process, the recovery-processing module 160 determines whether the content change that corresponds to the content change item of the content log item refers to the content copy (S516).

If it is determined that the content change refers to the content copy, the recovery-processing module 160 copies the metadata (S518), and inserts the copied metadata in the database system 120 (S520).

If it is determined that the content change does not refer to the content copy, the recovery-processing module 160 determines whether that the content change that corresponds to the content change item of the content log item refers to the content deletion (S524).

If it is determined that the content change refers to the content deletion, the recovery-processing module 160 deletes the metadata stored in the database system 120 (S526).

If it is determined that the content change does not refer to the content deletion, the recovery-processing module changes the metadata stored in the database system 120 (S528). Here, if the content change item does not refer to the content deletion, the content change item includes the content movement.

After performing any one of operations S520, S526, and S528, the recovery-processing module 160 determines whether the content change item of the content-change log exists (S530).

If it is determined that the content change item exists, the recovery-processing module 160 proceeds to operation S506, and repeats operations S506 to S530.

If it is determined that no content change item exists, the recovery-processing module completes the database transaction (S532).

The recovery-processing module 160 proceeds to another process after completion of the metadata recovery process (S534).

As described above, according to the system and method of checking the integrity of content and metadata according to embodiments of the present invention, the synchronization between the content and the metadata can be non-simultaneously processed by creating a difference between time points at which the content and the metadata are created or deleted.

Also, by non-simultaneously processing the synchronization between the content and the metadata, priority can be given in processing the content.

In addition, even if an abrupt power failure occurs, the integrity of the content and the metadata can be promptly recovered by comparing the content-change log stored in the database system and the metadata.

Although embodiments of the present invention have been described for illustrative purposes, those skilled in the art will appreciate that various modifications, additions and substitutions are possible, without departing from the scope and spirit of the invention as disclosed in the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of checking integrity of content and metadata, the method comprising:
storing changed content in a first storage space; and
storing the metadata corresponding to the changed content in a second storage space.

2. The method of claim 1, further comprising:
storing a content-change list reflecting the changed content; and
changing the metadata corresponding to a content change item in the content-change list.

3. The method of claim 1 or 2, further comprising storing a content-change log reflecting the changed content in the second storage space.

4. The method of any preceding claim, wherein the first storage space includes a file system, and the second storage space includes a database system.

5. The method of claim 3 or 4, wherein the first storage space includes a file system, and the second storage space includes a database system.

6. The method of any of claims 3-5, further comprising determining whether the changed content exists, before the storing the content-change log, starting a transaction, and completing the transaction after storing the content-change log.

7. The method of any of claims 2-6, wherein the storing the content-change list comprises:
analyzing the changed content;
processing the changed content; and
changing and storing the content-change list in which the changed content is reflected.

8. The method of any of claims 2-7, wherein changing the metadata comprises:
determining the content change item exists;
deleting the content change item; and
changing the metadata corresponding to the content change item.

9. The method of any of claims 2-8, further comprising changing a metadata list reflecting the changed metadata.

10. The method of any preceding claim, wherein the content change comprises at least one of content creation, content copy, content deletion, and content movement.

11. The method of any of claims 2-10, wherein the metadata change comprises at least one of content creation, content copy, content deletion, and content update.

12. The method of any of claims 9-11, wherein the storing the metadata comprises:
determining whether a metadata change item exists in the metadata list;
deleting the metadata change item; and
changing and storing the metadata reflecting the metadata change item.

13. The method of claim 12, wherein the storing the metadata further comprises deleting a content-change log item corresponding to the metadata change item.

14. The method of claim 12 or 13, wherein the storing the metadata further comprises proceeding with a transaction if the metadata change item exists.

15. The method of any preceding claim, further comprising recovering the metadata corresponding to a content log item of a content-change log.

16. The method of claim 15, wherein the recovering comprises:
determining the content log item exists,
deleting the content log item; and
recovering the metadata corresponding to the content log item.

17. The method of claim 15 or 16, wherein the recovering the metadata further comprises proceeding with a transaction if the content log item exists.

18. The method of any of claims 15-17, wherein the recovering the metadata comprises at least one of creating the metadata, copying the metadata, deleting the metadata, and updating the metadata.

19. A system for checking integrity of content and metadata, the system comprising:
a file system which stores the content and changed content;
a content-change-processing module which reflects the changed content in a content-change list and stores the content-change list;
a metadata-processing module which changes the metadata that corresponds to a content change item in the content-change list; and
a database system which stores the metadata.

20. The system of claim 19, wherein the database system stores a content-change log by reflecting the changed content therein.

21. The system of claim 19 or 20, wherein the metadata-processing module which changes a metadata list by reflecting the metadata therein.

22. The system of any of claims 19-21, further comprising a recovery-processing module which recovers the metadata corresponding to a content log item of the content-change log.
